# EUROPEAN PATENT APPLICATION

(11) **EP 1 120 272 A1**
(43) Date of publication of application: **01.08.2001**
(21) Application number: 00944270.8
(22) Date of filing: 05.07.2000
(51) Int. Cl.: B41J 29/38, G06F 3/12, H04N 5/91

(54) **DATA PRINTING SYSTEM, DATA PRINTING METHOD AND RECORDING MEDIUM**

(30) Priority: 05.07.1999 JP 19102799
(71) Applicant: Sony Corporation, Tokyo 141-0001 (JP)
(72) Inventor: IHARA, Yushi, Sony Corporation, Tokyo 141-0001 (JP); KITAMURA, Yoshio, Sony Corporation, Tokyo 141-0001 (JP); NARUSHIMA, Toshio, Sony Corporation, Tokyo 141-0001 (JP); NIIOKA, Makoto, Sony Corporation, Tokyo 141-0001 (JP); KAWAMURA, Yuji, Sony Corporation, Tokyo 141-0001 (JP)
(74) Representative: DeVile, Jonathan Mark, Dr.
(86) International application number: JP0004473
(87) International publication number: WO0102183

(57) **Abstract**

A data printing system comprising a recording and/or reproducing apparatus 6 which has an information input unit 41 for receiving image information and/or character information added to music information from outside, a recording/reproducing unit 42 for recording/reproducing the image information and/or character information received by the information input unit 41 to/from a recording medium, and an information outputting unit 41 for putting the image information and/or character information recorded in the recording medium into a packet conforming to the IEEE 1394 specification and outputting the IEEE 1394 packet; a printer 5 which has an input unit 31 for receiving the IEEE 1394 packet including the image information and/or character information, and a printing unit 33 for printing the image information and/or character information; and a controller 3 for controlling the recording and/or reproducing apparatus 6 and printer 5 so that the IEEE 1394 packet including the image information and/or character information is transmitted/received between the information input unit 41 and input unit 31 based on the IEEE 1394 specification.

## Description

### Technical Field

The present invention relates to a data printing system and method for printing an image stored in an image recording and/or reproducing apparatus by means of a printer connected thereto via an interface conforming to, for example, the IEEE (the Institute of Electrical and Electronics Engineers) 1394 specification, and a recording medium having recorded therein a program for implementing the data printing method.

### Background Art

The IEEE 1394 specification defines physical and electrical specifications of connectors provided on each of devices mutually connected to each other. Each of devices provided with an interface conforming to the IEEE 1394 specification can realize "Hot Plug and Play" to transmit/receive digital data at a high speed and automatically perform connection setting among the devices when they are physically connected to each other. For this reason, the IEEE 1394 specification has come into wide use as a standard serial interface specification in the related fields of industry.

In the field of music distribution via the Internet or satellite communication broadcast, music information indicating a musical sound as well as image information indicating the contents of a video clip etc. and character information indicating a title etc. of the musical sound which are associated with the music information are transmitted from a music distribution server to clients. Thus, in the field of music distribution, it has been proposed that image information being an MPEG-based moving picture and character information being text data should be added to the music information.

An STB (Set Top Box), television set and printer provided with an interface conforming to the IEEE 1394 specification are used in the field of music distribution.

Conventionally, a television set, STB, printer and recording and/or reproducing apparatus having a recording medium are connected to each other to record music information to the recording medium. However, downloaded image information and character information which are added to the music information are not printed out by the printer.

Also, there is available a printer for use in connection with a recording and/or reproducing apparatus adapted for recording/reproducing data to/from a widely used magneto-optical disc to print a title of music information recorded in the disc. However, since the recording and/or reproducing apparatus and printer have to be connected to each other according to a unique specification, there is a problem that such a printer has not been widely accepted.

### Disclosure of the Invention

Accordingly the present invention has an object to overcome the above-mentioned drawbacks of the prior art by providing a versatile and extendable data printing system and method which can print information added to music information, and a recording medium having recorded therein a program for implementing the data printing method.

The above object can be attained by providing a data printing system including: a recording and/or reproducing apparatus which has information input means for receiving image information and/or character information added to music information, recording/reproducing means for recording/reproducing the image information and/or character information received by the information input means to/from a random access recording medium, and information outputting means for putting the image information and/or character information into a packet conforming to the IEEE (the Institute of Electrical and Electronics Engineers) 1394 specification and outputting the IEEE 1394 packet to print the image information and/or character information reproduced from the recording medium by the recording/reproducing means; and a printer which has input means for receiving the IEEE 1394 packet including the image information and/or character information output from the recording and/or reproducing apparatus, and printing means for printing the image information and/or character information included in the IEEE 1394 packet.

Also the above object can be attained by providing a data printing method including: a first step of receiving image information and/or character information added to music information by means of a recording and/or reproducing apparatus, and recording/reproducing the image information and/or character information to/from a random access recording medium; a second step of putting the image information and/or character information into a packet conforming to the IEEE (the Institute of Electrical and Electronics Engineers) 1394 specification and outputting the IEEE 1394 packet to a printer to print the image information and/or character information reproduced by the first step; and a third step of receiving the IEEE 1394 packet including the image information and/or character information output by the second step, and printing the image information and/or character information included in the IEEE 1394 packet.

Also the above object can be attained by providing a recording medium having stored therein a program for reproducing image information and/or character information added to music information recorded in a random access recording medium, putting the image information and/or character information into a packet conforming to the IEEE (the Institute of Electrical and Electronics Engineers) 1394 specification and outputting the IEEE 1394 packet from a recording and/or reproducing apparatus to a printer to print the image information and/or character information, and printing the image information and/or character information included in the IEEE 1394 packet by means of the printer.

### Brief Description of the Drawings

FIG. 1 shows the configuration of the data printing system according to the present invention.

FIG. 2 is a block diagram of an STB, a printer, and a disc drive of the data printing system.

FIG. 3 is a flow chart explaining the procedure of printing performed by the data printer.

FIG. 4A, 4B, and 4C shows the configuration of the IEEE 1394 packet.

FIG. 5 shows the processing of printing additional information recorded in a recording medium of the printer by means of the printer, which is performed by a CPU of the STB.

FIG. 6 shows the procedure of the processing of printing additional information recorded in a recording medium of the printer by means of the printer, which is performed by the CPU of the STB.

### Best Mode for Carrying Out the Invention

The present invention will further be described below concerning the best modes for carrying out the present invention with reference to the accompanying drawings.

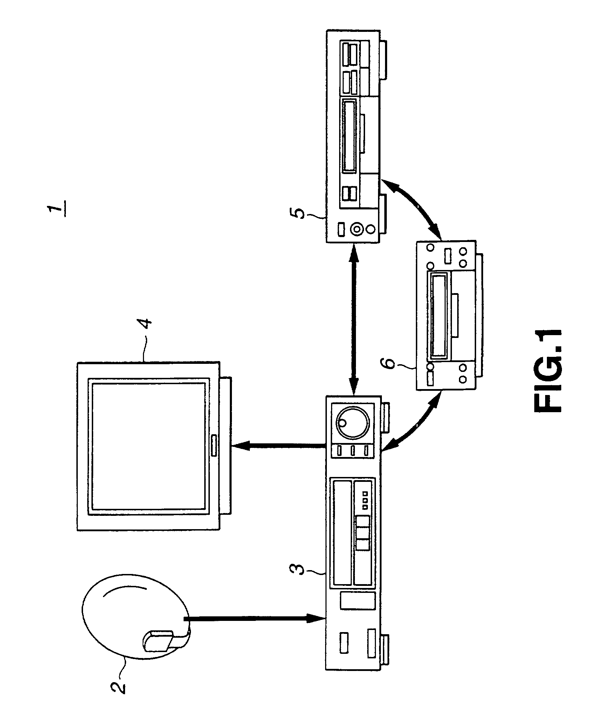

The present invention is applicable to a data printing system 1 configured as shown in Fig. 1.

The data printing system 1 includes an antenna 2 to receive a signal of moving picture information, music information, still picture and character information added to the music information, etc., which are broadcasted by means of, for example, a communication satellite, an STB (Set Top Box) 3 to process thus received signal in a predetermined manner, a television set 4 to display a moving picture, still picture, character information, etc., a printer 5 to print an image, and a disc drive 6 to record/reproduce data to/from a recording medium.

The antenna 2 receives a music and image signal from a music distribution server and outputs the signal to the STB 3. The signal received by the antenna 2 consists of image and music signals of multiple channels. The image data is compressed by the MPEG (Moving Picture Experts Group) and the music signal is scrambled by a predetermined manner. The music signal received by the antenna 2 has music information indicative of musical sounds, and additional information of the music information, which consists of an image and characters, etc. The additional information is bit map data for an image, and is text data for characters. It is noted that the data to be received by the antenna 2 may be transferred from a music server via the Internet.

The television set 4 receives NTSC (National Television System Committee) image data via the STB 3 to display a moving picture. In case the television set 4 is an HD television set capable of displaying an HD (High Definition) image, it receives moving picture data based on the HD specification via the STB 3 to display a moving picture. When the user manipulates the STB 3, the television set 4 has its display condition controlled by the STB 3 and displays a still picture, other character information, and so on.

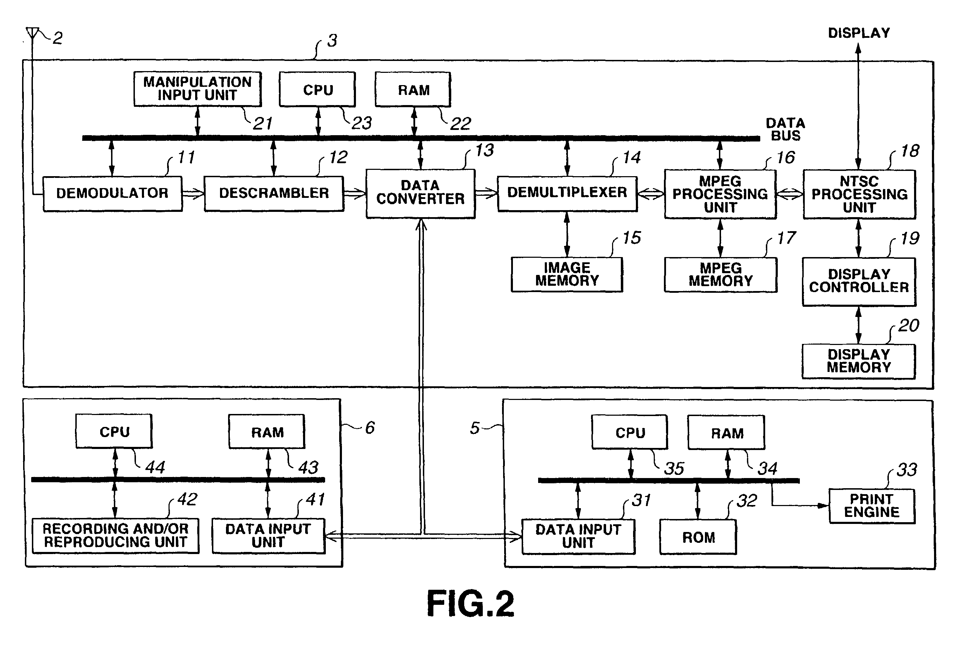

The STB 3 includes a demodulator 11 to demodulate data received by the antenna 2, a descrambler 12 to descramble data, a data converter 13 to convert data based on the IEEE 1394 specification, a demultiplexer 14 to extract data of a predetermined channel, an image memory 15, an MPEG processing unit 16 to perform decoding, an MPEG memory 17, an NTSC processing unit 18 to convert data to display an image on the television set 4, a display controller 19, a display memory 20, a manipulation input unit 21 to receive a direction from the user, a RAM (Random Access Memory) 22, and a CPU (Central Processing Unit) 23 to control each portion, as shown in Fig. 2.

The STB 3 has its demodulator 11, descrambler 12, data converter 13, demultiplexer 14, MPEG processing unit 16, manipulation input unit 21, RAM 22, and CPU 23 connected to a data bus, and the CPU 23 controls operation of each portion via the data bus.

The demodulator 11 receives, for example, a signal having an analog image composed of a moving picture stream, music information, and additional information of the music information, which consists of an image and characters etc. from the antenna 2. The demodulator 11 decodes the signal received by the antenna 2, and performs A/D conversion for the signal to output thus obtained digital data to the descrambler 12. The demodulator 11 receives a control signal from the CPU 23 via the data bus, and performs decoding and A/D conversion in accordance with the control signal.

The descrambler 12 descrambles data from the demodulator 11 to restore scrambled data. That is, the descrambler 12 receives scrambled data, and descrambles the data in accordance with the scrambling manner of the received data. Then, the descrambler 12 outputs the descrambled data to the data converter 13. The descrambler 12 receives a control signal from the CPU 23 via the data bus, and performs descrambling by the use of scrambling key information included in the control signal.

The data converter 13 is an interface circuit of a serial bus conforming to the IEEE 1394 specification, and processes data from the descrambler 12 based on the IEEE 1394 specification in accordance with a control signal from the CPU 23 to put received data of a moving picture, music, image and characters added to the music into a packet conforming to the IEEE 1394 specification and transmits the packet. The configuration of the packet will be explained later in detail.

At this time, the data converter 13 adds an overhead as predetermined control information to the data of a moving picture, music, and image and characters added to the music to generate a packet prescribed by the IEEE 1394 specification. When outputting downloaded music information and additional information of the music information to the disc drive 6, the data converter 13 is subject to the asynchronous arbitration. The data converter 13 issues a requirement signal to obtain a right to use the bus to the disc drive 6. In case the disc drive 6 at the end of a node authorizes the requirement, it returns an authorization signal to the data converter 13. Thus, the right to use the bus is secured, and the data can be transferred. In case the disc drive 6 rejects the requirement, it returns a rejection signal to the data converter 13. Thus, the right to use the bus is not secured, and the data can not be transferred. These data indicative of requirement and authorization is transferred asynchronously. When outputting music information and additional information to the disc drive 6, the data converter 13 outputs packets each having the music information and additional information in accordance with a response from the disc drive 6.

Furthermore, the data converter 13 secures the connection with the printer 5 under the control of the CPU 23 in accordance with above-described attribution, and generates a packet prescribed by the IEEE 1394 specification to output the packet to the printer 5 or disc drive 6 connected thereto based on the IEEE 1394 specification in a time sharing manner.

By thus obtaining the right to use the bus, the STB 3 secures the connection with the disc drive 6 and printer 5, and data is transmitted.

When displaying moving picture data received by the STB 3 on the television set 4 without processing the data based on the IEEE 1394 specification, the data converter 13 outputs moving picture data from the descrambler 12 to the demultiplexer 14 in accordance with a control signal from the CPU 23.

The demultiplexer 14 selects a channel designated by the CPU 23 out of a plurality of channels superposed on data from the data converter 13, and outputs only data of the designated channel to the MPEG processing unit 16.

The MPEG processing unit 16 decodes the data from the demultiplexer 14 based on the MPEG specification in accordance with a control signal from the CPU 23, and outputs the decoded data as non-compressed data to the NTSC processing unit 18. At this time, the MPEG processing unit 16 stores any time moving picture data in a plurality of frames to be decoded to the MPEG memory 17.

The MPEG processing unit 16 compresses moving picture data in the direction of time base and space by encoding the moving picture data from the NTSC processing unit 18 based on the MPEG specification in accordance with a control signal indicative of compressibility from the CPU 23, and outputs the encoded data to the demultiplexer 14. At this time, the MPEG processing unit 16 stores moving picture data in a plurality of frames to be encoded to the MPEG memory 17.

Furthermore, when outputting data of image information added to music information from the data converter 13 to the disc drive 6, the MPEG processing unit 16 may process still picture data based on the JPEG (Joint Photographic Coding Experts Group) specification in accordance with a control signal from the CPU 23. Other than the MPEG using inter-frame correlation, intra-frame compression such as DV can be employed.

The NTSC processing unit 18 encodes moving picture data transmitted from the MPEG processing unit 16 so that the data will be NTSC moving picture data capable of being displayed on the television set 4, and outputs the encoded data to the television set 4.

The display controller 19 processes the NTSC moving picture data from the NTSC processing unit 18 to display the data on the television set 4. At this time, the display controller 19 stores any time data to be processed to the display memory 20.

Specifically, in accordance with the television set 4, the display controller 19 controls the display size of moving picture data in frames to be displayed on the television set 4, and, for example, make the size 720 x 480 pixels for NTSC, or 1920 × 1080 pixels for HD (High Definition). Furthermore, when generating one pixel data, the display controller 19 generates 16 bit information with the ratio of the luminance signal Y, chroma signal Cr and Cb being 4:2:2.

When the user operates an operation button provided on the STB 3, the manipulation input unit 21 generates a manipulation input signal, and outputs the signal to the CPU 23. Specifically, the manipulation input unit 21 generates a manipulation input signal to direct the television set 4 to pause the moving picture and the printer 5 to print a resulting still picture when the user operates the operation button.

The CPU 23 generates a control signal to control the portions of the STB 3 based on a manipulation input signal from the manipulation input unit 21.

When displaying a moving picture signal received by the antenna 2 on the television set 4, the CPU 23 outputs a control signal to the demodulator 11, descrambler 12, data converter 13, demultiplexer 14, and MPEG processing unit 16 in this order to control demodulation, descrambling, channel selection, and decoding for the moving picture data based on the MPEG specification.

When taking in a still picture in frames from moving pictures displayed on the television set 4 in accordance with a manipulation input signal from the manipulation input unit 21, the CPU 23 generates a control signal so that the image memory 15 reads a still picture in frames stored in the display memory 20 at the time the manipulation input signal is input.

When receiving a manipulation input signal to direct the printer 5 to print a still picture, the CPU 23 controls the demultiplexer 14 and data converter 13 so that still picture data in frames stored in the image memory 15 is output to the printer 5 via the data converter 13 as an interface circuit conforming to the IEEE 1394 specification. The configuration of the packet conforming to the IEEE 1394 specification to be output will be explained later.

The printer 5 includes a data input unit 31 connected to the STB 3 and disc drive 6, a ROM (Read Only Memory) 32 having stored therein a print control program, a print engine 33 to print data on a print receptor, a RAM 34, and a CPU 35 to control each of the components, as shown in Fig. 2.

The data input unit 31 is, for example, an interface conforming to the IEEE 1394 specification, which processes still picture data input as a packet from the STB 3 and other additional information based on the IEEE 1394 specification in accordance with the control signal from the CPU 35.

When the data input unit 31 is mechanically connected to the disc drive 6 via an optical cable etc., a connection for transmission/reception of a packet to/from the disc drive 6 is set by the CPU 23 of the STB 3, and thus a receiver side plug is set.

When the connection setting is performed, the data input unit 31 transmits/receives data to/from the disc drive 6 in the asynchronous mode. That is, OPEN data indicative of connection authorization is transferred from the data input unit 31 to the disc drive 6, and the right to use the bus is secured when the data indicative of connection authorization is returned to the data input unit 31, and then a reproduced data packet is transmitted from the disc drive 6 to the printer 5.

The print engine 33 consists of a print receptor holding drive mechanism, a printer head, a printer head drive mechanism, etc., and is controlled by the CPU 35 to print a still picture on a print receptor.

The CPU 35 generates a control signal to control the data input unit 31 and print engine 33. At this time, the CPU 35 operates in accordance with a print control program stored in the ROM 32, and uses the RAM 34 as a work area and controls its contents.

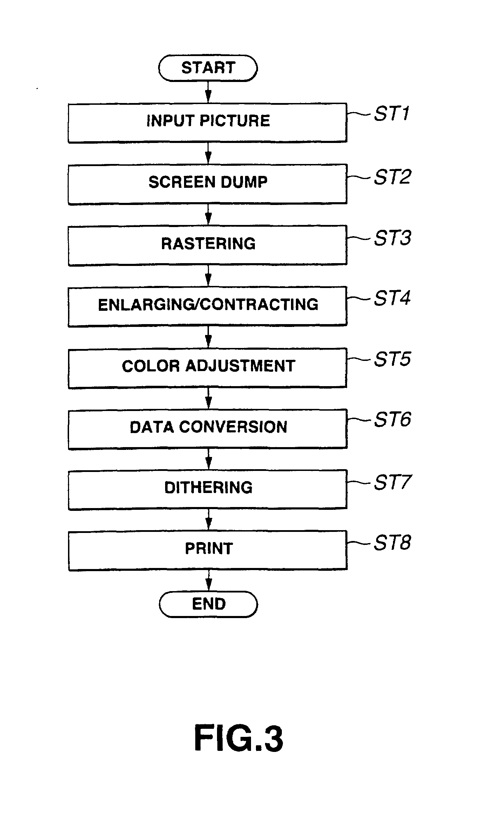

Next, print control performed by the CPU 35 of the printer 5 will be explained with reference to the flow chart shown in Fig. 3.

In step 1, the data input unit 31 of the printer 5 receives a data packet generated based on the IEEE 1394 specification from the disc drive 6, as shown in Fig. 3.

In step 2, the CPU 35 performs screen dumping to print whole the image displayed on the television set 4.

In step 3, the CPU 35 performs rastering for the still picture data which underwent screen dumping in step 2. That is, the CPU 35 converts the still picture to dots to transfer the still picture to the print engine 33.

In step 4, the CPU 35 expands/reduces the still picture data which underwent rastering in step 3. That is, when printing a still picture, the CPU 35 changes the size of the still picture within the range designated by, for example, the user.

In step 5, the CPU 35 adjusts the colors of the still picture data which is expanded/reduced in step 4 to generate print data consisting of R (Red), G (Green), and B (Blue).

In step 6, the CPU 35 converts the adjusted print data consisting of R, G, and B to print data of cyan, magenta, and yellow to determine the ratio of cyan, magenta, and yellow of each dot. And in step 7, dithering is performed.

In step 8, the CPU 35 outputs the print data obtained by performing dithering to the print engine 33, and drives the print engine 33 to print data on a print receptor.

The disc drive 6 includes a data input unit 41 to receive music information etc. from the STB 3, recording and/or reproducing unit 42 to record/reproduce music information to/from a recording medium, a RAM 43, and a CPU 44 to control each of the components, as shown in Fig. 2.

The data input unit 41 is, for example, an interface conforming to the IEEE 1394 specification, which processes music information input as a packet from the STB 3 based on the IEEE 1394 specification in accordance with the control signal from the CPU 44, and generates a packet including additional information such as a still picture or text data indicative of characters to output the packet to the printer 5. The data input unit 41 transfers additional information of music information recorded in a recording medium to the printer 5 in the asynchronous mode. That is, on receiving a response that the printer 5 can receive a packet, the data input unit 41 transmits a packet.

When the data input unit 41 is mechanically connected to the STB 3 and printer 5 via an optical cable etc., a connection for transmission/reception of a packet to/from the STB 3 and printer 5 is set by the CPU 23 of the STB 3.

The recording and/or reproducing unit 42 has, for example, a recordable and reproducible recording medium such as a magneto-optical disc, and records music information and additional information received by the data input unit 41 to the recording medium and reproduces music information or additional information recorded in the recording medium in accordance with the control signal from the CPU 44.

The CPU 44 controls components of the disc drive 6. That is, when recording music information and additional information received by the data input unit 41 to the recording medium, the CPU 44 outputs a control signal to the data input unit 41 and recording and/or reproducing unit 42.

When outputting additional information recorded in the recording medium to the printer 5, the CPU 44 outputs a control signal to the recording and/or reproducing unit 42 and data input unit 41. Then, the recording and/or reproducing unit 42 generates additional information, and the data input unit 41 generates a packet including the additional information.

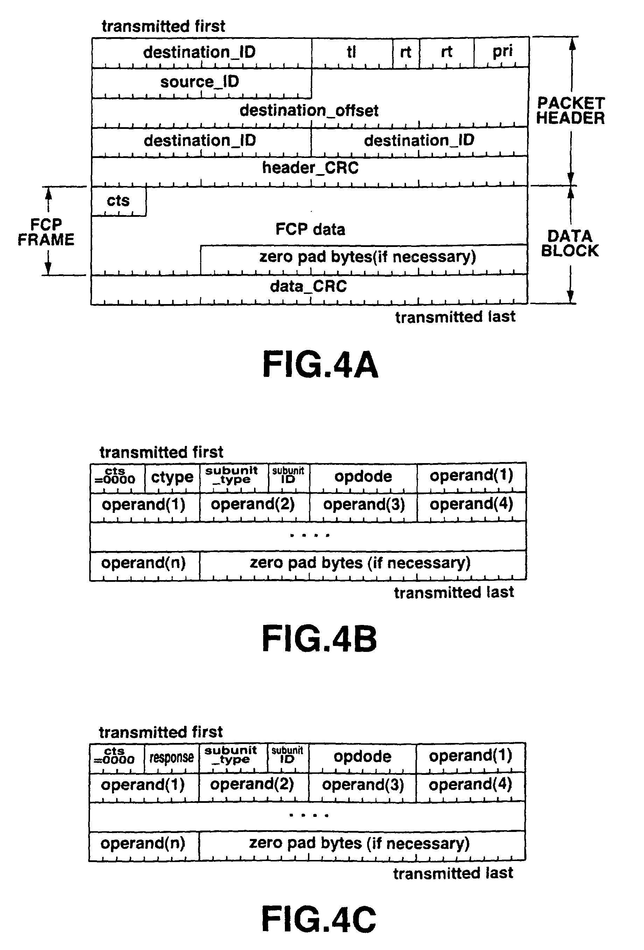

The configuration of the IEEE 1394 packet will be explained with reference to Fig. 4A, Fig. 4B, and Fig. 4C. Fig. 4A shows the packet configuration in the asynchronous mode conforming to the IEEE 1394 specification. In practice, when transmitting a packet, the packet shown in Fig. 4A is serially converted to be transmitted.

When transmitting the IEEE 1394 packet, data is transmitted either in the isochronous mode or in the asynchronous mode. Fig. 4A shows the packet configuration for transmission in the asynchronous mode.

For transmission in the asynchronous mode, the packet consists of a packet header and a data block, as shown in Fig. 4A. The packet header has described therein information about the packet itself, and the data block has stored therein data to be transmitted.

The packet header consists of the fields of *destination_ID*, *tl* (*transact label*), *rt (retry code), tcode*, *pri (priority)*, *source_ID*, *destination_offset*, *data_length*, *extended_tcode*, and *header_CRC*.

The *destination_ID* field has described therein an ID which receives the packet, specifically an ID number (Node ID) of a node prescribed by the IEEE 1394 bus. In the embodiment of the present invention, the ID number of the printer 5 is described in the *destination_ID* field.

The *tl (transact label)* field has described therein a packet number, specifically an eigenvalue, by which a node which receives or transmits a packet can recognize that the transaction is associated with itself.

The *rt (retry code)* field has described therein a retrying manner at the time of being busy. The *tcode* field has described therein a code which directs writing a message to a command register or response register.

The *pri (priority)* field has described therein the order of priority of packets. The *source_ID* field has described therein an ID of a node which transmits a packet, specifically an ID number of a node prescribed by the IEEE 1394 specification. In the embodiment of the present invention, the ID number of the disc drive 6 is described in the *source_ID* field.

The *destination_offset* field has described therein addresses of a command register and response register. The *data_length* field has described therein information about the data lengths of the packet header and data block. The *extended_tcode* field is used to extend *tcode.* The *header_CRC* has described therein a CRC calculation value to perform checksum of the packet header.

On the other hand, the data block consists of the fields of *ctc (command and Transaction Set), FCPdata (Function Control Protocol data),* and *data_CRC.*

The *ctc* field and *FCP data* field are called an *FCP* frame. The *data_CRC* field has described therein a CRC calculation value to perform checksum of the data block.

The *ctc* field defines the format of the *FCP* frame. That is, a packet in the asynchronous mode has the *FCP* frame, and the *FCP* frame has the *ctc* field as a field having stored therein information indicative of the format type of the *FCP* frame. The *FCP* frame is defined by the IEC (International Electrotechnical Commission 1833), and the format type of the *FCP* frame is determined by the *ctc* field. For example, it is assumed that a packet to be transmitted is a command packet. If the value of the *ctc* field is 0000, the *FCP* frame of the command packet is a command frame prescribed by the AV/C Digital Interface Command Set of the IEEE 1394 specification (referred to as an AV/C command frame, hereinafter). On the other hand, it is assumed that a packet to be transmitted is a response packet responding to the command packet. If the value of the *ctc* field is 0000, the *FCP* frame of the response packet is a response frame prescribed by the AV/C Digital Interface Command Set of the IEEE 1394 specification (referred to as an AV/C response frame, hereinafter).

Fig. 4B shows the configuration of the AV/C command frame. That is, the AV/C command frame consists of the fields of *cts*, *ctype*, *subunit_type*, *subunit_ID*, *opcode,* and *operand.* Since the unit of a packet in the asynchronous mode is 32 bits, 0 is added after the *operand* field if necessary so that the total bits of the AV/C command frame becomes integral multiple of 32 bits.

As in the above, the *cts* field of the AV/C command frame is 0000. The *ctype* field has described therein the command type. In case the value of the *ctype* field is 0000, the command of the packet is that for controlling the apparatus which receives the packet, that is a *control* command. On the other hand, in case the value of the *ctype* field is 0001, the command of the packet is that for inquiring the status of the apparatus which receives the packet, that is a *status* command.

The *subunit_type* field has described therein the type of a node to which the command is applied. For example, a predetermined value corresponding to a node of such as a monitor, a video cassette recorder is described in the *subunit_type* field to show the type of the node. In the embodiment of the present invention, the command is applied to the printer 5 and disc drive 6, and predetermined values are described in the *subunit_type* field to determine the type of the node. The *subunit_ID* field has described therein an ID number of an apparatus to which the command of the packet is applied.

The *opcode* field has described therein a code of a specific command for the node shown by the *subunit_type* field, that is an operation code. When directing the disc drive 6 to reproduce audio data recorded in a disc, a node value corresponding to the disc drive 6 is described in the *subunit_type* field, and a code to direct reproducing audio data is described in the *opcode.* On the other hand, when directing the disc drive 6 to reproduce additional information recorded in a disc, a node value corresponding to the disc drive 6 is described in the *subunit_type* field, and a code to direct reproducing additional information is described in the *opcode.* Furthermore, when directing the printer 5 to print data, a node value corresponding to the printer 5 is described in the *subunit_type* field, and a code to direct printing data is described in the *opcode.*

The *operand* field has described therein information required to perform an operation code described in the *opcode* if necessary. Specifically, the speed and direction for reproducing is described, and in the embodiment of the present invention, information to be transmitted is above-described additional information, and print direction, print size, print position, number of print sheets, etc. is described in the *operand* field for the printer 5. The *operand* field can set arbitrary number of fields as long as the asynchronous packet is not greater than a maximum value. Each field is assigned for each requirement.

Fig. 4C shows the configuration of the AV/C response frame. The configuration of the AV/C response frame is approximately similar to that of the AV/C command frame, and the *ctype* field of the AV/C command frame corresponds to the *response* field of the AV/C response frame. The response for the command is described in the *response* field. For example, when a command is normally received, a value indicating that the command is normally received is described in the *response* field, which is the response for the AV/C command frame.

The frame configuration shown in Fig. 4A, 4B, and 4C is prescribed in the IEEE 1394 specification and IEC 1883 specification, and details are described in those specifications.

According to the present invention, in order to print additional information as to audio information recorded in a disc, an AV/C command frame shown in Fig. 4B which has information such as print size, number of print sheets, print position, print direction is inserted into the data block of the asynchronous packet shown in Fig. 4A. The asynchronous packet is transferred from the STB 3 to the printer 5. Furthermore, the STB 3 inserts the AV/C command frame shown in Fig. 4B into the data block of the asynchronous packet shown in Fig. 4A, which directs the disc drive 6 to reproduce the additional information and transfer the reproduced additional information to the printer 5. Then the STB 3 transfers the packet to the disc drive 6. The additional information reproduced by the disc drive 6 is inserted into the data block of the asynchronous packet shown in Fig. 4A and transferred to the printer 5. The printer 5 prints the transferred additional information based on the AV/C command frame shown in Fig. 4B.

In the data printing system 1, when receiving music information by means of the antenna 2, the CPU 23 of the STB 3 controls the data converter 13 to generate an IEEE 1394 packet including the music information and transfer the packet to the disc drive 6. And the packet is recorded to the recording medium in the disc drive 6. At this time, the CPU 23 controls so that music information as well as additional information of the music information is included in the packet and transmitted to the disc drive 6. Specifically, the CPU 23 controls so that the additional information is inserted into the data block of the packet shown in Fig. 4A.

When receiving a manipulation input signal to direct printing additional information of music information recorded in the recording medium of the disc drive 6 , the CPU 23 sets the connection between the printer 5 and disc drive 6. Specifically, as described above, the CPU 23 sends an OPEN request to the plugs of the printer 5 and disc drive 6 which are connected to the IEEE 1394 bus to secure the right to use the IEEE 1394 bus. Then, the CPU 23 controls the disc drive 6 by the use of the connection setting to transmit the additional information from the disc drive 6 to the printer 5. This processing will be described later in detail.

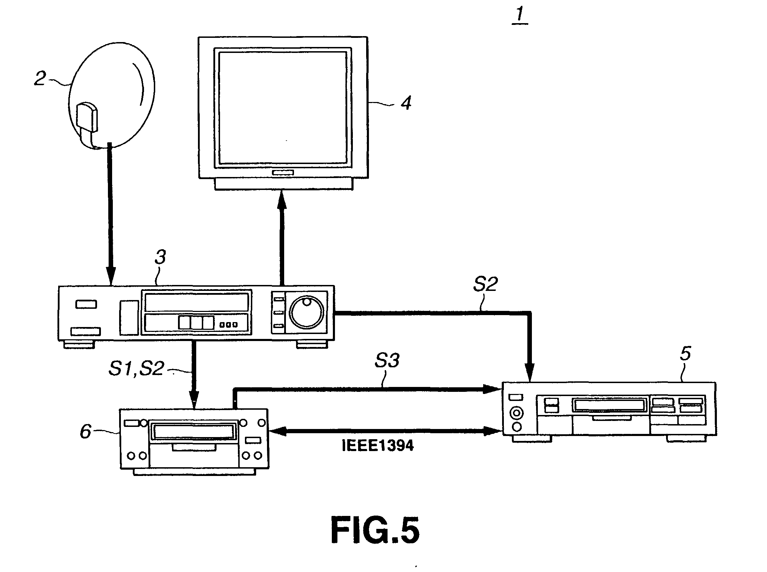

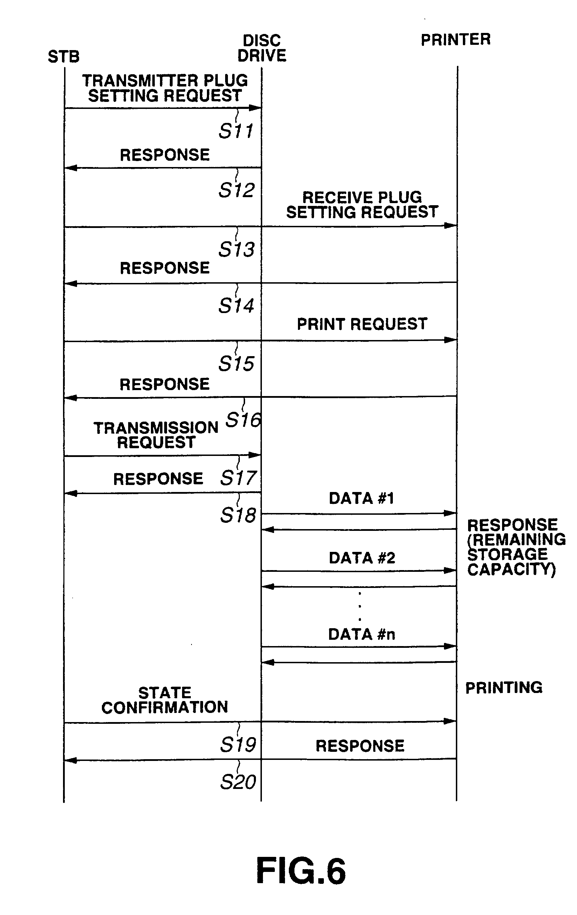

In the data printing system 1, music information and additional information received by the STB 3 is recorded to the recording medium of the disc drive 6, and an image being JPEG data and characters being text data included in the additional information is printed by the printer 5. This processing performed by the STB 3, disc drive 6 and printer 5 will be explained with reference to Figs. 5 and 6.

It is assumed that additional information (S1 in Fig. 5) received by the STB 3 is downloaded to the disc drive 6.

At first, the connection setting is performed between the printer 5 and disc drive 6, as shown in Fig. 6. That is, to secure the right to use the bus, the CPU 23 of the STB 3 sends a transmitter plug setting request (OPEN request) S11 to the disc drive 6 which transmits the additional information.

Then, of a plurality of plugs set at the data input unit 41, the CPU 44 of the disc drive 6 sets a plug which transmits additional information to the printer 5, and sends a response S12 to the STB 3. In this way, the right to use the IEEE 1394 bus is secured between the STB 3 and disc drive 6.

Next, the CPU 23 of the STB 3 sends a receiver plug setting request (OPEN request) S13 to the printer 5. Then, of a plurality of plugs set at the data input unit 31, the CPU 35 of the printer 5 sets a plug which receives additional information from the printer 6, and sends a response S14 to the STB 3. In this way, the right to use the IEEE 1394 bus is secured between the STB 3 and printer 5. Thus, since the right to use the IEEE 1394 bus is secured by the disc drive 6, the right to use the IEEE 1394 bus to transfer additional information is secured between the printer 5 and disc drive 6.

Next, the STB 3 sends a print request S15 to print an image and characters included in additional information to the printer 5. At this time, a command to direct printing data and codes indicative of such as number of print sheets, print direction, print position are inserted into the above-described AV/C command frame of the IEEE 1394 packet, and the packet is transferred. Then, the printer 5 is at the stand-by state for printing data, and sends a response S16 to the STB 3.

Next, the CPU 23 of the STB 3 sends to the STB 3 a transmission request S17 to transmit additional information to the printer 5. Then the CPU 44 of the disc drive 6 sends a response S18 to the STB 3. At this time, a code indicative of response is inserted into the *response* field of the AV/C command frame of the IEEE 1394 packet, and the packet is transferred to the STB 3.

Next, after the response S18 is sent to the STB 3, the CPU 44 of the disc drive 6 controls the recording and/or reproducing unit 42 to reproduce additional information and output the reproduced additional information to the data input unit 41. Then, the data input unit 41 divides the additional information into a plurality of data each having a predetermined size to generate data #1, data #2, ..., data #n, and generate packets for each data. Specifically, the reproduced additional information is inserted into the data block of the IEEE 1394 packet. Then, the data #1, data #2, ..., data #n is transmitted to the printer 5. At this time, the CPU 35 of the printer 5 monitors the remaining storage capacity of the data input unit 31, and transmits data as to the remaining storage capacity to the disc drive 6, which varies in accordance with the reception of the packets. After receiving the data #1, data #2, ..., data #n, the printer 5 starts printing data.

At this time, the CPU 23 of the STB 3 sends any time a state confirmation S19 to the printer 5 to confirm the printing state in response to a response S20 from the printer 5. Specifically, a code indicative of the state confirmation is inserted into the AV/C command frame of the IEEE 1394 packet. When receiving the packet, the printer 5 inserts a code indicative of the printing state into the AV/C response frame of the IEEE 1394 packet, and transfers the packet to the STB 3.

As in the above, according to the data printing system 1, since the data input unit 41 inserts additional information of music information into a packet conforming to the IEEE 1394 specification and transmits the packet to the printer 5, the printer 5 can print an image or characters even if the additional information recorded in the recording and/or reproducing unit 42 is image data or text data.

Thus, according to the data printing system 1, the printer 5 can print an image or characters by the use of a general-purpose interface such as the data input unit 41 even if additional information of music information received by the STB 3 from a music distribution server is image data or text data.

In the above-described data printing system 1, non-compressed still picture data from the STB 3 is inserted into a packet and the packet is transmitted to the printer 5. On the other hand, it can also be considered that moving picture data compressed by the MPEG processing unit 16 based on the MPEG or still picture data compressed based on the JPEG is inserted into a packet, and the packet is transmitted. In this way, the data printing system 1 can reduce data amount to be transmitted. Thus, the data printing system 1 can realize data transmission and printing data at a high speed.

As in the above, the STB 3 and printer 5 of above-described data printing system 1 has the data converter 13 and data input unit 31, respectively, as interface circuits conforming to the IEEE 1394 specification. However other types of interface circuits such as USB can be used. That is, the data printing system 1 having the STB 3 and printer 5 provided with interface circuits conforming to the USB can transmit and receive packets of digital data between the STB 3 and printer 5, and the printer 5 can print a refined image.

Furthermore, an MD (Mini Disc) deck can be considered as the disc drive 6, and information called MD clip such as a still picture, title, lyrics, singer can be considered as additional information. Moreover, a hard disc drive or DVD drive can also be considered as the disc drive 6 , and a still picture or text data as additional information can be transmitted from these drives to the printer 5. Moreover, music information and additional information of the music information can be transmitted to the STB 3 via the Internet from a music distribution server.

## Claims

1. A data printing system comprising:
a recording and/or reproducing apparatus which has information input means for receiving image information and/or character information added to music information, recording/reproducing means for recording/reproducing the image information and/or character information received by the information input means to/from a random access recording medium, and information outputting means for putting the image information and/or character information into a packet conforming to the IEEE (the Institute of Electrical and Electronics Engineers) 1394 specification and outputting the IEEE 1394 packet to print the image information and/or character information reproduced from the recording medium by the recording/reproducing means; and
a printer which has input means for receiving the IEEE 1394 packet including the image information and/or character information output from the recording and/or reproducing apparatus, and printing means for printing the image information and/or character information included in the IEEE 1394 packet.

2. The data printing system as set forth in Claim 1, further comprising:
data receiving means for receiving the music information and image information and/or character information added to the music information from outside, and outputting the music information and image information and/or character information to the information input means of the recording and/or reproducing apparatus, and controlling the recording and/or reproducing apparatus and printer so that the IEEE 1394 packet is transferred between them.

3. The data printing system as set forth in Claim 1, wherein the information outputting means of the recording and/or reproducing apparatus generates the IEEE 1394 packet so that the image information and/or character information is included in a data block region thereof and outputs the IEEE 1394 packet.

4. The data printing system as set forth in Claim 2, wherein the data receiving means controls the recording and/or reproducing apparatus and printer by generating the IEEE 1394 packet so that information which directs the printer to print the image information and/or character information transferred from the recording and/or reproducing apparatus is included in the IEEE 1394 packet and outputting the packet to the printer, and generating the IEEE 1394 packet so that information which directs the recording and/or reproducing apparatus to output the image information and/or character information is included in the IEEE 1394 packet and outputting the packet to the recording and/or reproducing apparatus.

5. The data printing system as set forth in Claim 4, wherein the data receiving means generates the IEEE 1394 packet so that information which directs the printer to print the image information and/or character information is included in the IEEE 1394 packet, and information as to the print size, print direction, print position, number of print sheets is included in the IEEE 1394 packet, and outputs the packet to the printer.

6. A data printing method comprising:
a first step of receiving image information and/or character information added to music information by means of a recording and/or reproducing apparatus, and recording/reproducing the image information and/or character information to/from a random access recording medium;
a second step of putting the image information and/or character information into a packet conforming to the IEEE (the Institute of Electrical and Electronics Engineers) 1394 specification and outputting the IEEE 1394 packet to a printer to print the image information and/or character information reproduced by the first step; and
a third step of receiving the IEEE 1394 packet including the image information and/or character information output by the second step, and printing the image information and/or character information included in the IEEE 1394 packet.

7. The data printing method as set forth in Claim 6, further comprising:
a data receiving step of receiving the music information and image information and/or character information added to the music information from outside, and outputting the music information and image information and/or character information to the recording and/or reproducing apparatus, and controlling the recording and/or reproducing apparatus and printer so that the IEEE 1394 packet is transferred between them.

8. The data printing method as set forth in Claim 6, wherein, in the second step, the IEEE 1394 packet is generated so that the image information and/or character information is included in a data block region thereof and the IEEE 1394 packet is output.

9. The data printing method as set forth in Claim 7, wherein the data receiving step has a step of generating the IEEE 1394 packet so that information which directs the printer to print the image information and/or character information transferred from the recording and/or reproducing apparatus is included in the IEEE 1394 packet and outputting the packet to the printer, and a step of generating the IEEE 1394 packet so that information which directs the recording and/or reproducing apparatus to output the image information and/or character information is included in the IEEE 1394 packet and outputting the packet to the recording and/or reproducing apparatus, and
wherein, after the IEEE 1394 packet is output to the printer and recording and/or reproducing apparatus, the IEEE 1394 packet including the image information and/or character information is output to the printer in the second step.

10. The data printing method as set forth in Claim 9, wherein, in the step of outputting the IEEE 1394 packet to the printer of the data receiving step, the IEEE 1394 packet is generated so that information which directs the printer to print the image information and/or character information is included in the IEEE 1394 packet, and information as to the print size, print direction, print position, number of print sheets is included in the IEEE 1394 packet, and the packet is output to the printer.

11. A recording medium having stored therein a program for reproducing image information and/or character information added to music information recorded in a random access recording medium, and putting the image information and/or character information into a packet conforming to the IEEE (the Institute of Electrical and Electronics Engineers) 1394 specification and outputting the IEEE 1394 packet from a recording and/or reproducing apparatus to a printer to print the image information and/or character information, and printing the image information and/or character information included in the IEEE 1394 packet by means of the printer.

12. The recording medium as set forth in Claim 11, wherein the program generates the IEEE 1394 packet so that the image information and/or character information is included in a data block region thereof and outputs the IEEE 1394 packet to the printer.

13. The recording medium as set forth in Claim 12, wherein the program generates the IEEE 1394 packet so that information which directs the printer to print the image information and/or character information transferred from the recording and/or reproducing apparatus is included in the IEEE 1394 packet and outputting the packet to the printer, and generates the IEEE 1394 packet so that information which directs the recording and/or reproducing apparatus to output the image information and/or character information is included in the IEEE 1394 packet and outputting the packet to the recording and/or reproducing apparatus, and, after the IEEE 1394 packet including the information to direct printing and information to direct outputting is output, the IEEE 1394 packet including the image information and/or character information is output from the recording and/or reproducing apparatus to the printer.

14. The recording medium as set forth in Claim 13, wherein the program generates the IEEE 1394 packet so that the information to direct printing is included in the IEEE 1394 packet, and information as to the print size, print direction, print position, number of print sheets is included in the IEEE 1394 packet, and the packet is output to the printer.
